# EUROPÄISCHE PATENTANMELDUNG

(11) **EP 2 199 059 A2**
(43) Veröffentlichungstag der Anmeldung: **23.06.2010**
(21) Anmeldenummer: 09177566.8
(22) Anmeldetag: 01.12.2009
(51) Int. Cl.: B29C 47/50, B29C 47/08, B29C 47/40, F04C 2/18, F04C 11/00

(54) **Extruderanordnung mit Zahnradpumpe sowie Verfahren zum Betrieb dieser**

(30) Priorität: 11.12.2008 DE 102008061327
(71) Anmelder: VMI - AZ Extrusion GmbH, 93486 Runding (DE)
(72) Erfinder: Fischer, Florian, 85560, Ebersberg (DE)
(74) Vertreter: Splanemann

(57) **Zusammenfassung**

Die Erfindung betrifft eine Extruderanordnung (10), sowie ein Verfahren zum Betrieb dieser, mit einem Schneckenextruder für viskose Massen, insbesondere Kunststoffschmelzen oder natürliche oder künstliche Kautschukmischungen, an dessen Ausgangsanschluss (22) eine Zahnradpumpe (18) angeschlossen ist und der Schneckenextruder weist eine Extruderschnecke (12) auf. Der Ausgangsanschluss (22) ist seitlich neben der Extruderschnecke (12) angeordnet und an der Stirnseite der Extruderschnecke (12) ist ein abnehmbarer Deckel (24) angeordnet.

## Beschreibung

Die Erfindung betrifft eine Extruderanordnung, gemäß dem Oberbegriff von Anspruch 1.

Eine derartige Extruderanordnung, mit welcher viskose Massen, beispielsweise Kautschukmischungen oder Kunststoffschmelzen, extrudierbar sind, ist seit langem bekannt. Beispielhaft seien hierzu die DE 31 33 647 C2 oder die DE 38 33 777 C2 genannt. Bei der erstgenannten Druckschrift ist an den Ausgangsanschluss in axialer Verlängerung des Doppelschneckenextruders eine Zahnradpumpe angeordnet, deren Zahnräder miteinander kämmen und für eine konstante Förderrate sorgen können. Ein seit Jahrzehnten hier bestehendes Problem liegt darin, dass zwischen der Zahnradpumpe und dem Schneckenextruder ein Übergangsbereich besteht, der praktisch nur dann zu reinigen ist, wenn die Verbindung zwischen dem Extruder und der Pumpe gelöst wird. Hierzu müssen die Verbindungsschrauben zwischen Extruder und Pumpe gelöst werden, und entweder der Extruder oder die Pumpe weggeklappt werden. Beide Teile, also sowohl der Extruder als auch die Pumpe, sind je angetriebene Förderaggregate, die je separate Schwingungen induzieren, was eine lösbare Verbindung herzustellen keineswegs vereinfacht.

Andererseits muss bei jedem Stillsetzen der Extruder/Zahnradpumen-Kombination diese leergefahren werden, und im Grunde ebenso bei einem Wechsel des zu extrudierenden Materials, um Vereinigungen und/oder Verstopfungen zu vermeiden.

Aufgrund dieser Schwierigkeiten werden teilweise - trotz der unbestreitbaren Vorteile volumetrischer Förderer - Doppelschneckenextruder ohne ausgangseitig volumetrische Fördervorrichtung eingesetzt.

Es ist auch bereits vorgeschlagen worden, andere als Zahnradpumpen als volumetrische Fördervorrichtungen zu verwenden. Ein Beispiel hierfür ist die aus der DE 10 2005 050 619 A1 bekannte Lösung.

Ferner ist es auch bereits vorgeschlagen worden, als volumetrische Fördervorrichtung eine Planetenpumpe einzusetzen, wozu auf die DE 101 54 860 A1 zu verweisen ist. Auch bei dieser Lösung besteht die Notwendigkeit, bei den genannten Anwendungsfällen den Übergangsbereich zu reinigen und hierzu die Pumpe von dem Extruder zu trennen.

Demgegenüber liegt der Erfindung die Aufgabe zu Grunde, eine Extruderanordnung gemäß dem Oberbegriff von Anspruch 1 sowie ein entsprechendes Verfahren gemäß dem Oberbegriff von Anspruch 18 zu schaffen, die hinsichtlich der Handhabbarkeit verbessert sind, ohne dass die Vorteile volumetrischer Förderung aufgegeben werden sollen.

Diese Aufgabe wird durch die Merkmale der Ansprüche 1 bzw. 18 gelöst. Vorteilhafte Weiterbildungen ergeben sich aus den Unteransprüchen.

Erfindungsgemäß besonders günstig ist es, dass die Zahnradpumpe seitlich neben und im Wesentlichen vollständig radial außerhalb sämtlicher Extruderschnecken des Schneckenextruders angeordnet ist, wobei der Schneckenextruder sich im Wesentlichen parallel zur Anordnung der Zahnradpumpe erstreckt. Die Zahnradpumpe besteht bevorzugt aus zwei miteinander kämmenden, gleich großen Zahnrädern und grenzt unmittelbar an die Extruderschnecke des Schneckenextruders an. Der Übergangsbereich, der bei dieser Anordnung zwischen Pumpe und Extruder besteht, ist im Wesentlichen dreieckförmig und ausgesprochen klein.

Erfindungsgemäß besonders bevorzugt ist es, dass durch die Realisierung des ausgesprochen kleinen und im Wesentlichen dreieckförmigen Übergangsbereich eine bessere Selbstreinigung realisierbar ist. Das dort vorhandene und insofern eine recht geringe Masse darstellende System wird von den Zahnrädern der Zahnradpumpe bei entsprechender Viskosität gleichsam mitgezogen, so dass die sonst üblichen und bei axialer Anordnung von Extruder und Pumpe erforderlichen Reinigungsschritte mindestens teilweise entfallen können.

Erfindungsgemäß besonders günstig ist es auch, dass der Übergangsbereich ausgesprochen klein gemacht werden kann. Hierdurch entstehen geringe Materialverluste, gerade bei einer Dreieckanordnung von Extruderschnecke und Zahnradpumpe.

Erfindungsgemäß ist es auch günstig, dass auch ein einfaches Befüllen der Zahnradpumpe möglich ist. Beispielsweise kann der Extruder für das Befüllen der Zahnradpumpe mit verminderter Temperatur und mit verminderten Druck betrieben werden, bis der kleine Übergangsbereich gefüllt ist, um ein schonendes und störungsfreies Anlaufen des Extruder/Zahnradpumpen-Kombination zu gewährleisten.

Erfindungsgemäß ist es wesentlich, dass der Ausgangsanschluss des Schneckenextruders sich seitlich, also in radialer Richtung der Extruderschnecken oder der Extruderschnecke, erstreckt, und zwar dort unmittelbar angrenzend an die Zahnräder der Zahnradpumpe, die sich parallel zu der Ebene des Ausgangsanschlusses erstrecken.

Zur Realisierung eines erfindungsgemäß bevorzugten Deckels, der an der Stirnseite des Schneckenextruders angeflanscht ist, kann das Reinigen des Übergangsbereichs in einfacher Weise erfolgen, und der Übergangsbereich lässt sich über die Stirnseite zugänglich machen. Durch Öffnen des Deckels liegt dieser Übergangsbereich in achsparalleler Richtung frei. Wenn der Extruder nun langsam betrieben wird, schiebt sich das dort befindliche Restmaterial durch die Deckelöffnung nach vorne heraus. Dies gelingt auch bei schräg verzahnten Zahnrädern der Zahnradpumpe, im Hinblick auf den in axialer Richtung geringen Reibungswiderstand entlang der Axialrichtung der Zahnflanken der Zahnräder der Zahnradpumpe.

Erfindungsgemäß besonders günstig ist es, dass sich der Deckel auch als Anfahrventil ausnutzen lässt. Hierzu wird der Deckel geöffnet, wenn die Extruderanordnung angefahren wird. Der Extruder fördert und die geförderte Masse gelangt ins Freie. Sobald der Prozess stabil ist, wird der Deckel geschlossen, so dass die Förderung gleich mit einem stabilen Prozess beginnt. Insofern ist der erfindungsgemäße Deckel nicht auf die dargestellte Ausführungsform beschränkt. Beispielsweise kann als Deckel auch ein Schraubbolzen mit einer Queröffnung verwendet werden, der verdreht wird, wenn das Anfahrventil bzw. der Deckel geschlossen wird und eine Stellung aufweist, die eine Förderung der Masse ins Freie ermöglicht, wenn der Deckel bzw. das Anfahrventil geöffnet sein soll.

Ein beliebiges anderes geeignetes Schließelement ist ebenfalls einsetzbar, beispielsweise ein Schieber oder ein anderes betätigbares Element, das zwei Stellungen, nämlich eine Freigabestellung und eine Schließstellung, ermöglicht.

Wenn eine Doppelschneckenextruderanordnung gewählt wird, lässt sich diese erfindungsgemäß in gleicher Weise ausgestalten. Naturgemäß ist - gerade bei gleichem Außendurchmessern der Zahnräder und Extruderschnecken - dann der Übergangsbereich im Wesentlichen rhombusförmig und vergrößert. Um diese Vergrößerung zu kompensieren, ist entweder ein leichter Versatz der Schnecken gegen die Zahnräder möglich. Hierdurch wird der Übergangbereich gleichsam abgeflacht und hinsichtlich seines Volumens verkleinert. Alternativ ist es auch möglich, einen Einsatzkörper zu verwenden, der getrennt von dem Deckel oder an diesem angeflanscht strömungsgünstig sich in den Übergangsbereich hinein erstreckt und ausschließlich dazu dient, das dort verbleibende Restmaterial zu reduzieren. Beim Leerfahren des Extruders wird dann kurzerhand der Einsatzkörper nach Öffnen des Deckels entfernt, und der Extruder langsam angefahren, um den Übergangsbereich zu reinigen.

Erfindungsgemäß ist es darüber hinaus günstig, dass keine mechanische Trennung zwischen Extruder und Zahnradpumpe erforderlich ist. Dies vereinfacht die Konstruktion deutlich und gewährleistet darüber hinaus, dass die Zahnradpumpe und der Extruder sich gleichsam automatisch stets auf der gleichen Temperatur befinden, denn es besteht eine metallische Verbindung zwischen dem Extrudergehäuse und dem Zahnradpumpengehäuse.

Durch den erfindungsgemäßen Deckel wird zudem die Wartung und Inspektion der Extruderschnecken, beispielsweise auch die Prüfung des Rundlaufs, erleichtert, denn beim Leerlauf des Extruders ist dies mit einfachen Mitteln bei geöffnetem Deckel während Rundlauf durch axiale Inaugenscheinnahme zu erfassen.

Erfindungsgemäß besonders günstig ist es, dass eine ggf. erforderliche Lagerung der Extruderschnecken an deren vorderen Ende keineswegs aufwendiger als bei üblichen, stirnseits den Ausgangsanschluss aufweisenden Extruderschnecken ist. Es ist ohne Weiteres eine seitliche Abstützung der Extruderschnecken möglich.

In vorteilhafter Ausgestaltung der Erfindung ist es vorgesehen, dass die Extruderschnecken oder die Extruderschnecke und die Zahnräder der Zahnradpumpe in dichter Packung zueinander angeordnet sind. Im Grunde wäre sogar ein Getriebeeingriff zwischen der Extruderschnecke und der Zahnradpumpe darstellbar, aber nur dann, wenn eine veränderliche Einstellung des Drehzahlverhältnisses dieser zueinander nicht erforderlich sein sollte.

Der erfindungsgemäße Deckel lässt sich mechanisch oder hydraulisch betätigbar anbringen, bevorzugt an dem Extrudergehäuse gelagert. Beispielsweise können hierzu geeignete Schraubbolzen, ggf. kombiniert mit einem Scharnier auf einer Seite, verwendet werden. Alternativ lässt sich der Deckel hydraulisch oder auch pneumatisch öffnen und schließen. Während es für Inspektionszwecke besonders günstig ist, dass die gesamte Stirnfläche der Schneckenanordnung des Extruders einschließlich des Übergangsbereichs, durch den sich der Ausganganschluss des Extruders erstreckt, durch den Deckel abgedeckt ist, ist es in einer modifizierten Ausgestaltung auch möglich, lediglich den Übergangsbereich über den Deckel abzudecken und die übrige Stirnfläche einstückig mit dem übrigen Extrudergehäuse auszugestalten.

Erfindungsgemäß ist es darüber hinaus günstig, dass die erfindungsgemäße Lösung sowohl für gleichsinnig rotierende Doppelschneckenextruder als auch für konische Doppelschneckenextruder einsetzbar ist. Bei konischen Doppelschnecken erstrecken sich die Achsen beider Extruderschnecken nicht parallel zueinander, sondern laufen schräg aufeinander zu. Die von ihnen aufgespannte Ebene ist erfindungsgemäß leicht schräg geneigt zur Ebene des Ausgangsanschlusses und zugleich parallel zur Ebene der Achsen der Zahnräder der Zahnradpumpe.

Der Ausgangsanschluss des Extruders ist erfindungsgemäß seitlich des vorderen Bereichs der Extruderschnecke oder der Extruderschnecken ausgebildet. Das von den Extruderschnecken geförderte Material verlässt diese somit seitlich, während die Stirnseite der Extruderschnecken verschlossen ist.

Weitere Vorteile, Einzelheiten und Merkmale der Erfindung ergeben sich aus der nachfolgenden Beschreibung mehrerer Ausführungsbeispiele anhand der Zeichnungen.

Es zeigen:
- Fig. 1: eine schematische Ansicht eines Details einer ersten Ausführungsform einer erfindungsgemäßen Extruderanordnung;
- Fig. 2: ein Schnitt durch die Ausführungsform gemäß Fig. 1, ebenfalls in schematischer Darstellung;
- Fig. 3: ein Schnitt durch eine modifizierte Ausführungsform, in der Darstellung gemäß Fig. 2;
- Fig. 4: eine Seitenansicht einer erfindungsgemäßen Extruderanordnung in einer weiteren Ausführungsform;
- Fig. 5: ein Schnitt entlang der Linie A-A gemäß Fig. 4;
- Fig. 6: ein Schnitt entlang der Linie B-B aus Fig. 4;
- Fig. 7: eine schematische Ansicht eines Details einer dritten Ausführungsform einer erfindungsgemäßen Extruderanord nung;
- Fig. 8: eine schematische Ansicht einer vierten Ausführungsform einer erfindungsgemäßen Extruderanordnung; und
- Fig. 9: eine schematische Ansicht einer fünften Ausführungsform einer erfindungsgemäßen Extruderanordnung.

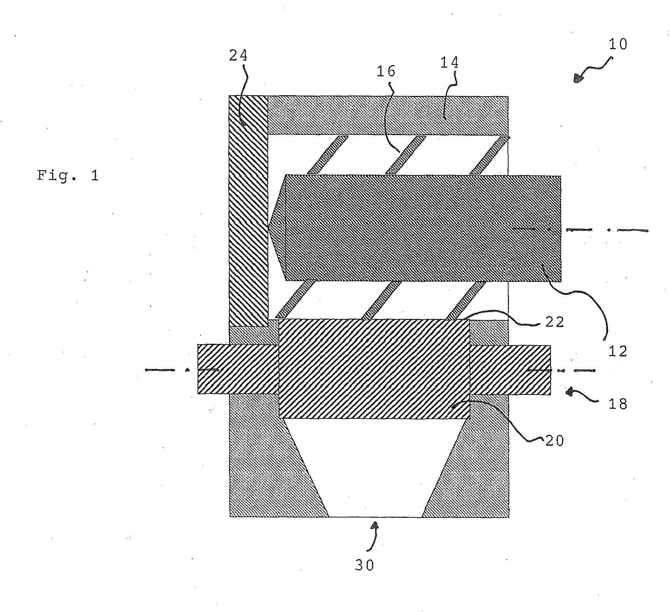

Die in Fig. 1 dargestellte Ausführungsform der Extruderanordnung 10 weist eine Extruderschnecke 12 auf, die in einem Gehäuse 14 in an sich bekannter Weise geführt ist. Von der Extruderschnecke 12 und dem Gehäuse 14 ist in Fig. 1 der vordere, also ausgangsseitige Teil dargestellt, und aus Fig. 1 ist auch die Schneckenwendel 16 ersichtlich.

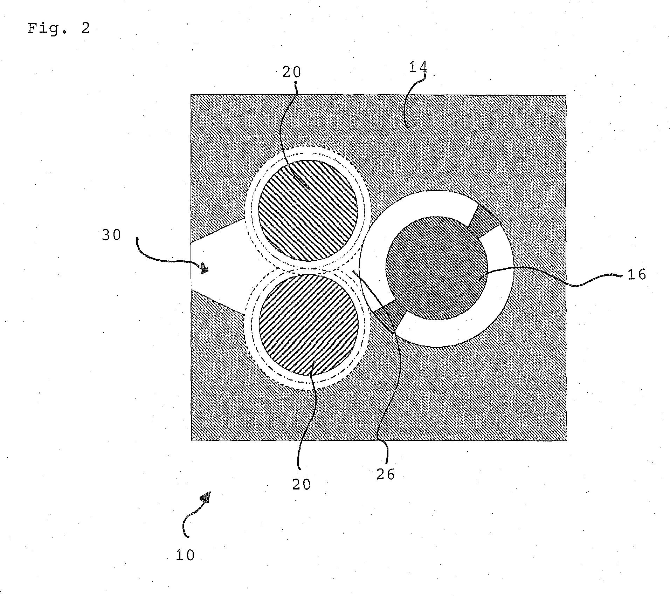

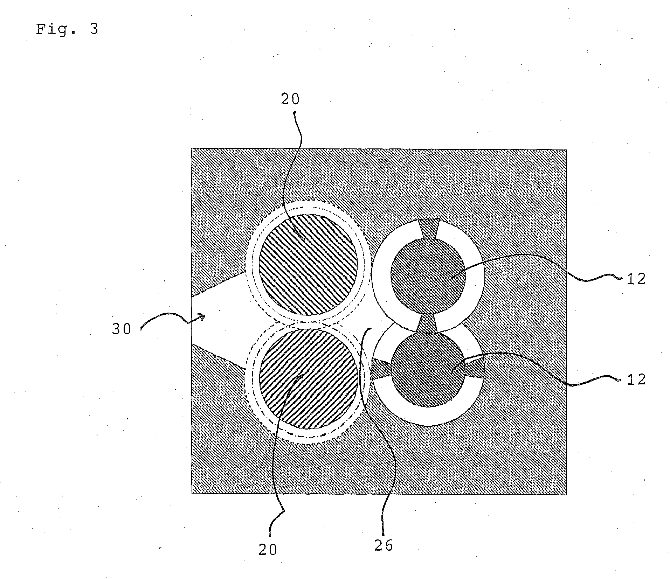

Radial außerhalb der Schneckenwendel 16, aber unmittelbar an diese angrenzend, ist erfindungsgemäß eine Zahnradpumpe 18 vorgesehen, die Zahnräder aufweist, von denen ein Zahnrad 20 schematisch dargestellt ist. Das Zahnrad 20 erstreckt sich parallel zur Extruderschnecke 12. Insofern ist der Ausgangsanschluss 22 der Extruderanordnung seitlich der Extruderschnecken 16 vorgesehen. Erfindungsgemäß ist ein Deckel 24 stirnseitig der Extruderschnecken 12 angeordnet. Der Deckel 24 ist lösbar an dem Gehäuse 14 befestigt. Er erstreckt sich etwas über die Extruderschnecken 16 hinaus, also auch über den Ausgangsanschluss 22 hinaus und deckt insofern mindestens zum großen Teil den aus Fig. 2 ersichtlichen Übergangsbereich 26 ab. Bei einem größeren Übergangsbereich, wie er in Fig. 3 dargestellt ist, ist der Deckel 24 bevorzugt demgegenüber noch weiter in Richtung Zahnradpumpe vergrößert.

Das von der Extruderschnecke 16 geförderte Material tritt seitlich an dem vorderen Ende aus dem Bereich der Extruderschnecke 16 aus und verlässt diese über den Ausgangsanschluss 22. Es gelangt dann in dem Bereich des volumetrischen Förderers in Form der Zahnradpumpe 18. Die Zahnradpumpe 18, die beispielhaft aus zwei Zahnrädern besteht, fördert die viskose Masse zu einer Austrittsdüse 30, an die beispielsweise ein Spritzkopf angeschlossen sein kann, der hier nicht dargestellt ist.

Zum Reinigen des Übergangsbereich, also in Fig. 1 etwa im Bereich des Ausgangsanschlusses 22, ist der Deckel 24 entfernbar. Der Extruder wird dann bei abgenommenen Deckel mit niedriger Drehzahl betrieben und verbleibendes Material aus dem Übergangsbereich wird axial durch die dann offene Öffnung, die normalerweise von dem Deckel 24 verschlossen ist, herausgefördert. Bei Bedarf kann hier mit einem geeigneten Werkzeug nachgeholfen werden, obwohl dies regelmäßig nicht nötig ist, denn auch die Zähne der Zahnräder 20 der Zahnradpumpe 18 erstrecken sich typischerweise in axialer Richtung oder wenigstens - bei Schrägverzahnung - im Wesentlichen in axialer Richtung.

In gleicher Weise kann auch die Zahnradpumpe bei niedrigem Druck - und damit auch bei niedriger Temperatur - gefüllt werden. Ferner lässt sich auch durch die Öffnung des Deckels 24 vergleichsweise leicht eine Wartung der Extruderschnecken 12 durchführen.

Aus Fig. 2 ist ersichtlich, in welcher Weise eine Extruderschnecke 16 in ihrer relativen Lage zu den Zahnrädern 20 der Zahnradpumpe 18 angeordnet ist. Die Extruderschnecke 16 ist eng benachbart der Doppelanordnung von Zahnrädern 20 angeordnet. Wie ersichtlich ist, erstreckt sich zwischen diesen ein verbleibender Übergangsbereich mit konkaven Seitenflächen, entsprechend den Radien der benachbarten Teile. Dieser Übergangsbereich muss beim Leerfahren des Extruders ebenfalls entleert werden, wozu erfindungsgemäß die in axialer Richtung wirkende Reibung der Extruderschnecken einsetzbar ist und damit die bislang erforderliche, voneinander lösbare Lagerung der Gehäuse für Pumpe und Extruder entbehrlich ist.

Dementsprechend ist in Fig. 2 auch das Gehäuse 14 einstückig dargestellt.

Aus Fig. 3 ist eine modifizierte Ausgestaltung der erfindungsgemäßen Extruderanordnung ersichtlich. Dort ist ein Doppelschneckenextruder mit dementsprechend zwei Extruderschnecken 12 vorgesehen. Diese erstrecken sich seitlich von Zahnrädern 20, und zwischen diesen vier im Querschnitt im wesentlichen kreisförmigen Elementen erstreckt sich ein Übergangsbereich 26, der gegenüber der Ausführungsform gemäß Fig. 2 deutlich größer ist. Auch dieser Übergangsbereich 26 lässt sich erfindungsgemäß ausleeren, denn der Deckel gemäß Fig. 1 erstreckt sich bei dieser Ausführungsform über dem Übergangsbereich 26 hinweg.

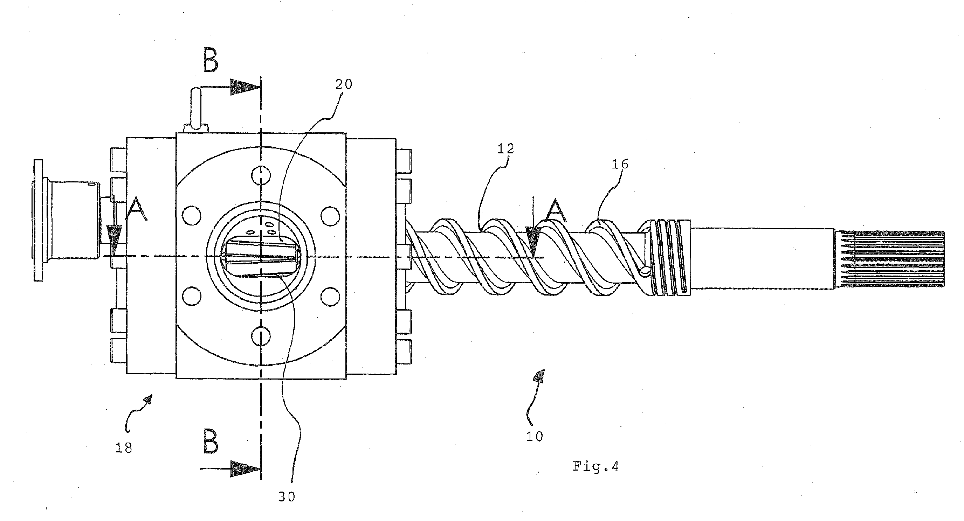

In einer modifizierten Ausgestaltung sind die Extruderschnecken gemäß Fig. 3 je konisch, weisen also einen größeren Eingangs- als Ausgangsdurchmesser auf. Durch diese Lösung ist eine strömungstechnisch günstige Anpassung an große Befüllöffnungen möglich. Es ist sowohl die Realisierung von gleichsinnig als auch von gegensinnig rotierenden Förderschnecken realisierbar. Ausgangsseitig, also in etwa im Bereich, der in Fig. 3 dargestellt ist, weisen derartige Extruderschnecken einen deutlich kleineren Durchmesser auf, der auch kleiner als der Durchmesser der Zahnräder 20 der Zahnradpumpe 18 sein kann. Aus Fig. 4 ist eine modifizierte Ausgestaltung einer erfindungsgemäßen Extruderanordnung 10 ersichtlich. Aus Fig. 4 ist ersichtlich, dass die Extruderschnecke 12 mit ihren Schneckenwendeln 16 zu einer Zahnradpumpe 18 hin verläuft.

Aus Fig. 4 ist auch ersichtlich, dass Zahnräder 20 der Zahnradpumpe 18 miteinander kämmen, und auch die Ausgestaltung der Austrittdüse 30.

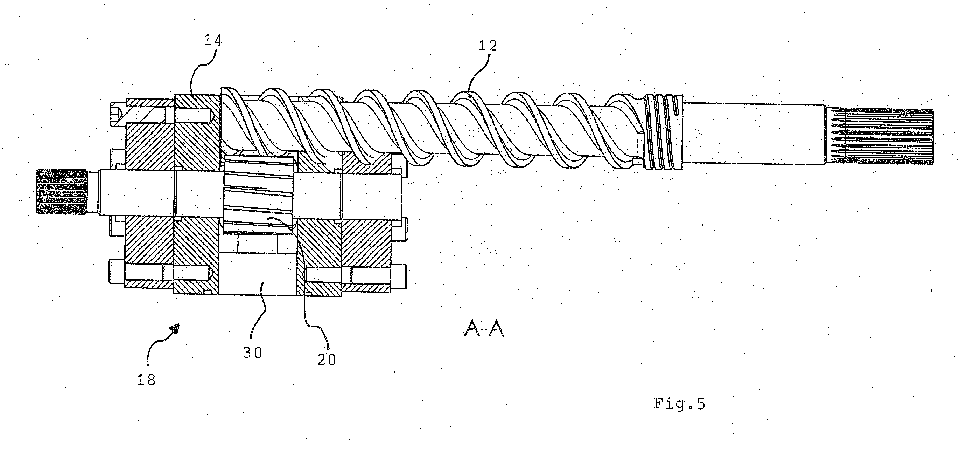

Demgegenüber ist aus Fig. 5 zu ersehen, in welcher Weise die Zahnradpumpe 18 gelagert sein kann. Zwischen/über den Zahnrädern 20 erstreckt sich der Übergangsbereich, so dass die Extruderschnecke 12, die in Fig. 5 dargestellt ist, in der Zeichnungsansicht gemäß Fig. 5 mit dem Zahnrad 20 überlappt. Hinter der Zeichnungsebene ist der Übergangsbereich und der in Fig. 5 nicht dargestellte Deckel vorgesehen, der den Übergangsbereich bei Entfernung frei von außen zugänglich macht. Bei dieser Ausgestaltung läuft die Extruderschnecke 12 stumpf aus, und ihre Stirnfläche ist von einem Teil des Gehäuses 14 abgedeckt, im dargestellten Ausführungsbeispiel als Teil der Zahnradpumpe.

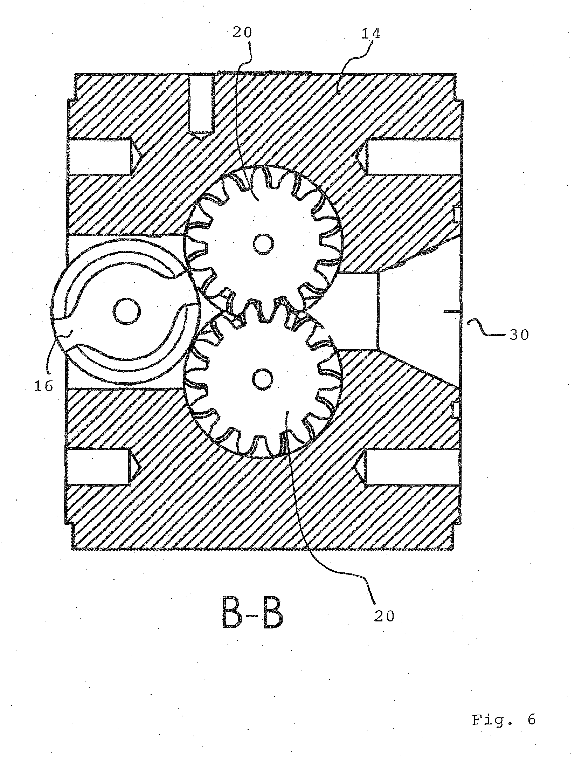

Wie aus Fig. 6 ersichtlich ist, kann die Extruderschnecke 12 in einer Art Schacht des Gehäuses 14 aufgenommen sein, wobei es sich versteht, dass an sich eine Berührung oder direkte Anlage zwischen der Extruderschnecke und Zahnrädern 20 der Zahnradpumpe nicht erwünscht ist.

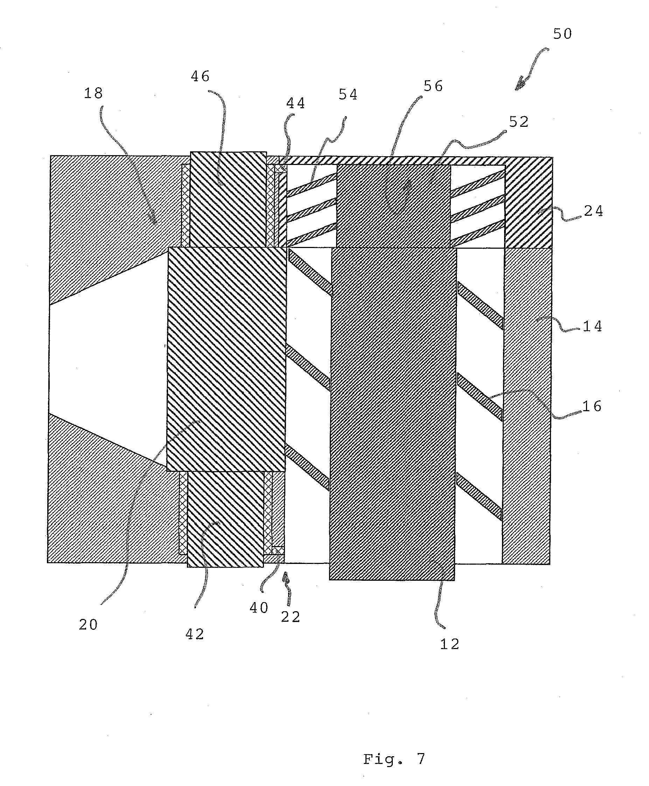

In Fig. 7 ist eine weitere Ausführungsform einer erfindungsgemäßen Extruderanordnung dargestellt. Hier wie auch in den weiteren Figuren bezeichnen gleiche Bezugszeichen gleiche oder entsprechende Teile.

Diese Ausführungsform zeichnet sich durch eine explizite hydrodynamische Lagerung aus. Hierzu wird in einem Kanal 40 ein Teil des geförderten Volumens von dem Materialstrom der Extruderschnecke 16 abgezweigt, und zwar vor dem Auslassanschluss 22, also stromauf dieser Stelle. Der dort realisierte kurze Kanal führt zu einem Zylinderspalt, der einen Lagerzapfen 42 eines Zahnrads 20 umgibt.

Ein entsprechender Kanal 44 ist weiter stromab als der Auslassanschluss 22 vorgesehen und führt zu einem Zylinderspalt, der den gegenüberliegenden Lagerzapfen 46 des gleichen Zahnrads 20 umgibt. Auf diese Weise erfährt das Zahnrad 20 eine hydrodynamische Lagerung über den so abgezweigten Leckagevolumenstrom.

In zusätzlicher bevorzugter Ausgestaltung ist es vorgesehen, eine Rückfördereinrichtung 50 stirnseitig der Extruderschnecke 12 zu realisieren. Durch die Rückfördereinrichtung 50 soll vermieden werden, dass an der Stirnseite der Förderdschnecke 16 Materialreste verbleiben, selbst dann, wenn der Deckel nicht vorgesehen ist oder nur teilweise vorgesehen ist. Zudem soll der Zuführwirkungsgrad für die Zahnradpumpe 18 verbessert werden.

In dem dargestellten Ausführungsbeispiel gemäß Fig. 7 ist hierzu die Extruderschnecke 16 über einen Schneckenzapfen 52 verlängert. Der Schneckenzapfen 52 trägt eine Gegenwendel 54, die gegenläufig zu der Schneckenwendel 16 ausgebildet ist. Da der Schneckenzapfen 52 einstückig oder als separates Teil mit der Extruderschnecke 12 im Übrigen ausgebildet ist, entsteht so eine zur Schneckenwendel 16 gegenläufige Förderwirkung, also eine Rückförderung, die die Zufuhr von Material zu dem Übergangsbereich und damit zu der Zahnradpumpe 18 verbessert.

In dem dargestellten Ausführungsbeispiel ist die Gegenwendel 54 mit dem Schneckenzapfen 52 in einer entsprechenden Ausnehmung 56 in dem Deckel 24 ausgebildet. Es versteht sich, dass anstelle dessen diese Anordnung auch in eine gehäusefesten Stirnfläche des Gehäuses 14 realisiert sein kann.

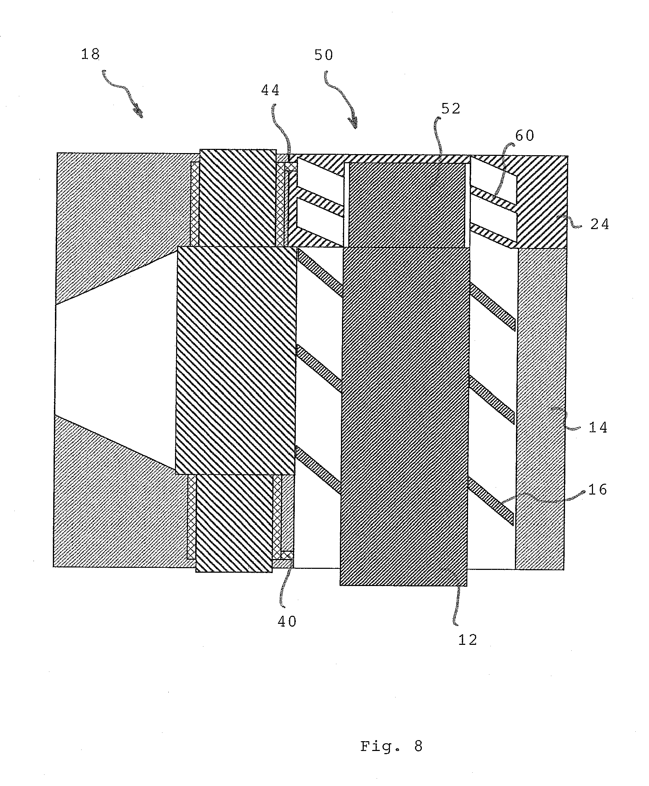

Die Ausführungsform gemäß Fig. 8 zeichnet sich ebenfalls durch eine hydrodynamische Lagerung der Zahnräder 20 und durch eine Rückförderung aus. Bei dieser Ausführungsform ist in der Stirnfläche des Gehäuses 14 oder in dem Deckel 24 ein Rückfördergang 60 ausgebildet. Dieser Rückfördergang ist feststehend, also gehäusefest oder deckelfest. In von Transferextrudern an sich bekannter Weise erstreckt er sich gleichsinnig zu der Schneckenwendel 16, und der Schneckenzapfen 52 erstreckt sich als Zylinder mit gegenüber dem Kern der Extruderschnecke 16 vermindertem Durchmesser in den Deckel 24 hinein.

Auch hier besteht die Möglichkeit, über die Kanäle 40 und 44 für die schwimmende Lagerung der Zahnradpumpe 18 zu sorgen, wobei der Kanal 44 je endseitig der Rückfördereinrichtung 50 angebracht ist.

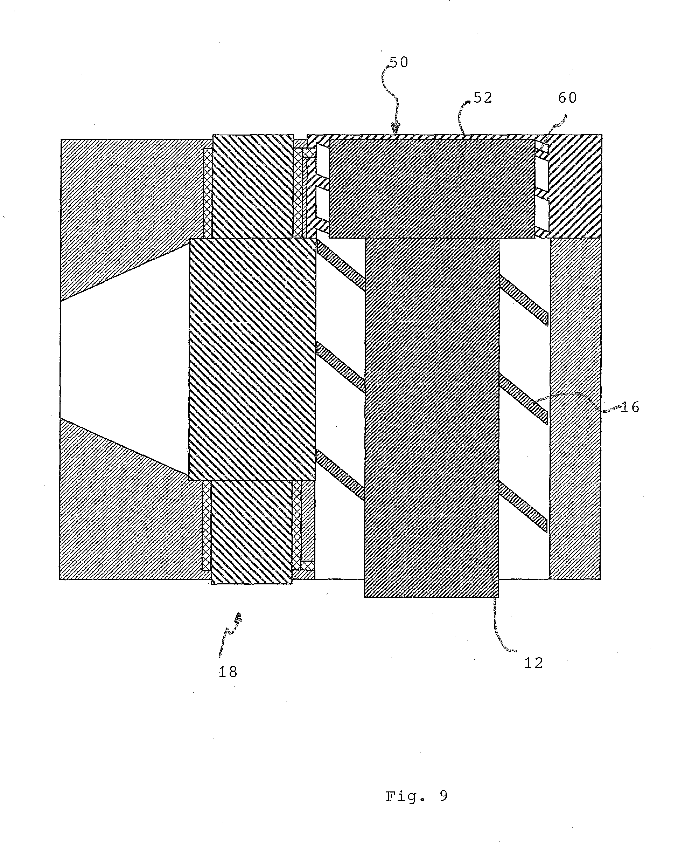

Fig. 9 zeigt eine gegenüber Fig. 8 etwas modifizierte fünfte Ausgestaltung der erfindungsgemäßen Ausgestaltung der erfindungsgemäßen Extruderanordnung. Bei dieser Lösung ist der Schneckenzapfen 52 vergrößert, also im Gegensatz zu der Ausführungsform gemäß Fig. 8 mit größerem Durchmesser als der Kerndurchmesser der Extruderschnecke 12. Auch hier erstreckt sich ein Rückfördergang 60 zur Bildung der Rückfördereinrichtung 50 in Verlängerung der Schneckenwendel 16 der Extruderschnecke 12.

Durch diese Ausgestaltung ist es möglich, den Schneckenzapfen 52 praktisch ebenfalls als eine Art hydrodynamisches Lager zu verwenden und zugleich den Rücktransport der viskosen Masse zu gewährleisten.

## Patentansprüche

1. Extruderanordnung, mit einem Schneckenextruder für viskose Massen, insbesondere Kunststoffschmelzen oder natürliche oder künstliche Kautschukmischungen, an dessen Ausgangsanschluss eine Zahnradpumpe angeschlossen ist, wobei der Schneckenextruder eine Extruderschnecke aufweist, **dadurch gekennzeichnet, dass** der Ausgangsanschluss (22) seitlich neben der Extruderschnecke (12) angeordnet ist.

2. Extruderanordnung nach Anspruch 1, **dadurch gekennzeichnet, dass** an der Stirnseite der Extruderschnecke (12) ein Schließelement, insbesondere ein abnehmbarer Deckel (24) angeordnet ist.

3. Extruderanordnung nach einem der vorhergehenden Ansprüche, **dadurch gekennzeichnet, dass** die Zahnradpumpe (18) miteinander kämmende Zahnräder aufweist, deren Achsen sich im Wesentlichen parallel, insbesondere parallel, zur Achse der Extruderschnecke (12) erstrecken und insbesondere aus zwei miteinander kämmenden Zahnrädern aufgebaut ist.

4. Extruderanordnung nach einem der vorhergehenden Ansprüche, **dadurch gekennzeichnet, dass** die Zahnradpumpe (18) zwei miteinander kämmende Zahnräder (20) im Wesentlichen gleichen Durchmessers aufweist und dass die Extruderschnecke (12) radial im Wesentlichen angrenzend an beide angeordnet ist und dass insbesondere der Durchmesser der Zahnräder (20) und der Extruderschnecke (12) im Wesentlichen gleich ist.

5. Extruderanordnung nach einem der vorhergehenden Ansprüche, **dadurch gekennzeichnet, dass** die Achsen der Zahnräder der Zahnradpumpe (18) und die Achse oder die Achsen der Extruderschnecken (12) gegeneinander versetzt angeordnet sind.

6. Extruderanordnung nach einem der vorhergehenden Ansprüche, **dadurch gekennzeichnet, dass** der Extruder als Doppelschneckenextruder ausgebildet ist und seitlich eng angrenzend an den Zahnrädern der Zahnradpumpe (18) gelagert ist, wobei die beiden Achsen der Schnecken des Doppelschneckenextruders eine Extruderachsenebene aufspannt und die Achsen der Zahnräder der Zahnradpumpe (18) eine Pumpenachsenebene aufspannen, und dass die Ebenen sich zueinander parallel erstrecken.

7. Extruderanordnung nach Anspruch 7, **dadurch gekennzeichnet, dass** die Extruderschnecken (12) konisch mit einem stromab geringer werdenden Durchmesser ausgebildet sind und die Achsen der Extruderschnecken (12) konvergieren.

8. Extruderanordnung nach einem der Ansprüche 7 bis 8, **dadurch gekennzeichnet, dass** der Übergangsbereich (26) zwischen dem Extruder und der Zahnradpumpe (18), in welchem sich der Ausgangsanschluss (22) erstreckt, hinsichtlich seines Volumens gegenüber einem Rhombus oder einen Dreieck reduziert ist, sei es durch Versatz der Extruderschnecke (12) oder der Extruderschnecken (12) gegenüber den Zahnrädern der Zahnradpumpe (18), sei es durch einen Einsatzkörper, der den Übergangsbereich (26) mindestens teilweise ausfüllt.

9. Extruderanordnung nach einem der vorhergehenden Ansprüche, **dadurch gekennzeichnet, dass** die Zahnräder der Zahnradpumpe (18) sich im Wesentlichen parallel zu den Extruderschnecken (12) und im Wesentlichen über dessen vorderstes, also stromab liegendes Viertel erstrecken.

10. Extruderanordnung nach einem der vorhergehenden Ansprüche, **dadurch gekennzeichnet, dass** der Schneckenextruder ein Extrudergehäuse (14) und die Zahnradpumpe (18) ein Pumpengehäuse aufweist und dass die Gehäuse (14) verschraubungsfrei miteinander verbunden, insbesondere einstückig zueinander, ausgebildet sind und thermisch der Einstückigkeit gleichwertig zueinander in Verbindung stehen.

11. Extruderanordnung nach einem der vorhergehenden Ansprüche, **dadurch gekennzeichnet, dass** seitlich des vorderen Bereichs der Extruderschnecke (12) oder der Extruderschnecken (12) Kanäle (40, 44) abzweigen, über welche Zahnradwellen der Zahnradpumpe (18) hydrodynamisch lagerbar sind.

12. Extruderanordnung nach einem der vorhergehenden Ansprüche, **dadurch gekennzeichnet, dass** die Extruderanordnuung eine Rückfördereinrichtung (50) stirnseits der Extruderschnecken (12) aufweist und dass insbesondere der Deckel (24) die Stirnseite des Schneckenextruders abdeckt, insbesondere vollständig abdeckt, und an dem Extrudergehäuse (14) befestigt ist, und besonders bevorzugt hydraulisch und/oder pneumatisch mit dem Gehäuse (14) des Schneckenextruders und/oder der Zahnradpumpe (18) verbunden ist.

13. Extruderanordnung nach einem der vorhergehenden Ansprüche, **dadurch gekennzeichnet, dass** der Deckel (24) bei Entfernung den Übergangsbereich (26) zwischen dem Schneckenextruder und der Zahnradpumpe (18) freigibt und dass insbesondere der Deckel ein Anfahrventil der Extruder/Zahnradpumpen-Kombination ersetzt, das zum Anfahren der Extruderanordnung öffenbar und bei stabilem Prozess schließbar ist.

14. Verfahren zum Betrieb einer Extruderanordnung, mit einem Schneckenextruder und einer Zahnradpumpe, die eine viskose Masse fördern, **dadurch gekennzeichnet, dass** die Zahnradpumpe (18) zwei Zahnräder mit Achsen aufweist, die sich parallel zur Achse einer Extruderschnecke (12) des Schneckenextruders oder - bei Realisierung des Schneckenextruders als Doppelschneckenextruder - zur Ebene erstreckt, die durch deren Achsen aufgespannt ist, und dass eine Reinigung einer Übergangszone zwischen Schneckenextruder und Zahnradpumpe (18) durch Abnehmen eines Deckels (24), der stirnseitig des Schneckenextruders angebracht ist, vorgenommen wird, und wobei für das Entleeren der Extruderanordnung (10) Masse durch Rotation der Extruderschnecke (12) durch die von dem Deckel (24) freigegebene Öffnung entfernt wird.

15. Verfahren nach Anspruch 14, **dadurch gekennzeichnet, dass** die Zahnradpumpe (18) seitlich aus dem Extruder heraus bei niedrigem Druck und niedriger Temperatur gefüllt wird.
